# EUROPÄISCHE PATENTSCHRIFT

(11) **EP 2 393 701 B1**
(45) Veröffentlichungstag und Bekanntmachung des Hinweises auf die Patenterteilung: **06.11.2013**
(21) Anmeldenummer: 10700857.5
(22) Anmeldetag: 14.01.2010
(51) Int. Cl.: B62D 5/04, B62D 6/00

(54) **BESTIMMUNG EINES SOLL-LENKMOMENTS IN EINER LENKVORRICHTUNG**
DETERMINING A TARGET STEERING TORQUE IN A STEERING DEVICE
DÉTERMINATION D'UN COUPLE DE DIRECTION DE CONSIGNE DANS UN DISPOSITIF DE DIRECTION

(30) Priorität: 05.02.2009 DE 102009000638
(43) Veröffentlichungstag der Anmeldung: 14.12.2011
(73) Patentinhaber: ZF Lenksysteme GmbH, 73527 Schwäbisch Gmünd (DE); Greul, Roland, 73525 Schwäbisch Gmünd (DE); Werner, Thomas, 73492 Rainau (DE)
(72) Erfinder: GREUL, Roland, 73525 Schwäbisch Gmünd (DE); WERNER, Thomas, 73492 Rainau (DE)
(86) Internationale Anmeldenummer: PCT/EP2010/050400
(87) Internationale Veröffentlichungsnummer: WO 2010/089172

(56) Entgegenhaltungen:
- EP-A1- 1 625 993
- EP-A2- 1 138 578
- EP-A2- 1 514 765
- EP-A2- 2 020 363
- DE-A1- 19 751 125
- GB-A- 2 206 321

## Beschreibung

Die Erfindung betrifft ein Verfahren zur Bestimmung eines Soll-Lenkmoments für ein Lenkmittel einer Lenkvorrichtung in einem Fahrzeug.

Die Erfindung betrifft auch ein Steuergerät zur Steuerung/Regelung einer Lenkvorrichtung in einem Fahrzeug. Die Erfindung betrifft ferner ein Computerprogramm, das auf einem Steuergerät zur Steuerung/Regelung einer Lenkvorrichtung in einem Fahrzeug ablauffähig ist.

Bei modernen Lenkvorrichtungen, beispielsweise bei einer elektrischen Servolenkung (EPS) oder einem so genannten Steer-by-Wire (SbW) Lenksystem, wird ein Soll-Lenkmoment ermittelt, das an einem Lenkmittel, beispielsweise einem Lenkrad angelegt wird, um der von dem Fahrer aufgebrachten Kraft entgegenzuwirken oder die von dem Fahrer aufgebrachte Kraft zu unterstützen. Das Soll-Lenkmoment kann auch als Sollhandmoment bezeichnet werden. Damit soll dem Fahrer ein der aktuellen Fahrsituation entsprechendes Fahrgefühl vermittelt werden. Bei einer herkömmlichen Lenkung, bei der eine mechanische Verbindung zwischen dem Lenkmittel und den zu lenkenden Rädern besteht, hängt das Soll-Lenkmoment maßgeblich von Seitenführungskräften ab, die über ein Lenkgestänge auf die Lenkvorrichtung und letztlich auf das Lenkmittel einwirken.

Bei einem SbW-Lenksystemen wird das Soll-Lenkmoment beispielsweise mittels eines geeigneten Lenkradaktuators erzeugt. Bei einem EPS-System, bei dem eine mechanische Verbindung zwischen dem Lenkrad und den zu lenkenden Rädern besteht, gibt es aktuelle Regelungskonzepte, die das Einregeln eines dem Sollhandmoment entsprechenden Soll-Lenkmoments zur Erzeugung eines gewünschten Lenkgefühls am Lenkrad ermöglichen. Hierzu wird ein Elektromotor oder eine elektromechanische Servoeinheit derart angesteuert bzw. eingeregelt, dass sich das dem gewünschten Sollhandmoment entsprechende Soll-Lenkmoment einstellt. Das Soll-Lenkmoment kann das Moment am Drehstab oder das Moment am Lenkrad beschreiben.

Sowohl für SbW-Systeme als auch für EPS-Systeme mit einem Regelungskonzept zur Regelung des Lenkmoments liegen verschiedene Ansätze zur Berechnung des Sollhandmoments bzw. zur Berechnung des Soll-Lenkmoments vor. In Abhängigkeit von der Art des Lenksystems, entspricht das Lenkmoment beispielsweise dem Handmoment und/oder einem so genannten Drehstabmoment. Die vorgenannten Ansätze basieren auf verschiedenen Applikationsfunktionen, deren Kombination jedoch in einigen Fahrzuständen beziehungsweise in einigen Fahrsituationen kein zufriedenstellendes Lenkgefühl liefert. Für die Bestimmung des Soll-Lenkmoments kann beispielsweise eine aktuelle Querbeschleunigung in Form einer so genannten Zahnstangenkraft, berücksichtigt werden. Daneben können weitere Größen herangezogen werden. Ferner können bereits vorhandene Applikationsfunktionen herangezogen werden, die beispielsweise zusätzlich Reibungsmomente berücksichtigen, so dass die an dem Lenkmittel tatsächlich gefühlte Auswirkung der Querbeschleunigung realistischer dargestellt werden kann.

Grundsätzlich besteht bei der Bestimmung des Soll-Lenkmoments zunächst die Schwierigkeit, geeignete Eingangsgrößen auszuwählen. Diese Eingangsgrößen können dann auf unterschiedliche Arten kombiniert werden, wobei häufig der Einfluss einer einzelnen Eingangsgröße nicht mehr vollständig nachvollziehbar ist, so dass eine Korrektur oder Verbesserung eines Soll-Lenkmoments nur schwer möglich ist.

EP 2 020 363 A2 betrifft eine Steuervorrichtung für Fahrzeuge. Ein erstes Steuergerät beeinflusst das Übersetzungsverhältnis zwischen den gelenkten Rädern und dem Lenkrad. Ein zweites Steuergerät beeinflusst ein Hilfsmoment für die Lenkvorrichtung.

Die Aufgabe der vorliegenden Erfindung ist es, sowohl für SbW-Systeme als auch für EPS-Systeme mit einem Regelungskonzept zur Regelung des Lenkmoments ein Lenkgefühl durch Erzeugung eines Soll-Lenkmoments zu realisieren. Hierbei soll das Lenkgefühl beziehungsweise das Soll-Lenkmoment an unterschiedliche Lenkungen beziehungsweise Fahrzeugtypen oder Anforderungen anpassbar sein. Das sich ergebende Lenkgefühl soll in allen Fahrzuständen und Fahrsituationen ein gleichwertiges oder verbessertes Lenkgefühl im Vergleich zu heute am Markt befindlichen hydraulischen und elektromechanischen Lenksystemen aufweisen. Damit soll erreicht werden, dass dem Fahrer möglichst zuverlässig und präzise Informationen über aktuelle Fahrzustände und Fahrsituationen über das Soll-Lenkmoment und das Lenkmittel übermittelt werden.

Die Aufgabe wird durch ein Verfahren der eingangs genannten Art dadurch gelöst, dass das Soll-Lenkmoment in Abhängigkeit von Einzelkomponenten gebildet wird, wobei die Einzelkomponenten mindestens ein Basislenkmoment, ein Dämpfungsmoment, ein Hysteresemoment und ein Mittenmoment umfassen. Diese Einzelkomponenten können beispielsweise durch Addition zu dem Soll-Lenkmoment zusammengefasst werden.

Das Basislenkmoment wird in Abhängigkeit von einer von außen einwirkenden Kraft, also beispielsweise der so genannten Zahnstangenkraft oder einer mittels eines geeigneten Sensors ermittelten Querbeschleunigung, und in Abhängigkeit von einer Fahrzeuggeschwindigkeit bestimmt. Das Basislenkmoment erzeugt damit ein Grundlenkkraftniveau, wobei die aktuelle Zahnstangenkraft in Abhängigkeit von der aktuellen Geschwindigkeit berücksichtigt wird. Das Grundlenkkraftniveau wird vorzugsweise durch applizierbare Momentkennlinien, die von der Zahnstangenkraft abhängig sind, erzeugt. Hierbei sind für verschiedene Geschwindigkeiten unterschiedliche Verläufe der Basislenkmomentkennlinien vorhanden. Diese unterschiedlichen Verläufe der Basislenkmomentkennlinien können beispielsweise in Abhängigkeit von einem bestimmten Fahrzeug oder von einem zu erreichenden Komfort oder Lenkgefühl bestimmt werden. Mit dem Basislenkmoment lässt sich damit der von hydraulischen Lenksystemen bekannte so genannte Servotronic-Effekt erreichen. Gemäß einer anderen Ausbildungsform wird das Basislenkmoment mittels eines Kennfelds erzeugt, so dass das Basislenkmoment in Abhängigkeit von einer aktuellen Fahrzeuggeschwindigkeit und einer aktuellen von außen einwirkenden Kraft bestimmt wird.

Das Dämpfungsmoment wird in Abhängigkeit von einer Lenkgeschwindigkeit, also beispielsweise einer Lenkradgeschwindigkeit, und der Fahrzeuggeschwindigkeit bestimmt. Damit wird eine so genannte aktive Dämpfung erzeugt, die es ermöglicht, den Fahrer beim Lenkvorgang zu unterstützen, indem beispielsweise die Lenkung beruhigt wird. Hierbei kann vorgesehen sein, bei einer hohen Fahrzeuggeschwindigkeit und einer hohen Lenkgeschwindigkeit ein höheres Lenkmoment vorzugeben, um die Gefahr eines Überlenkens zu verringern.

Das Hysteresemoment wird in Abhängigkeit von der aktuellen Lenkgeschwindigkeit und der aktuellen Fahrzeuggeschwindigkeit bestimmt. Das Hysteresemoment ist der Lenkradbewegung entgegengesetzt und ermöglicht so die Darstellung einer Reibung. Vorteilhafterweise wird das Hysteresemoment zusätzlich in Abhängigkeit von einem aktuellen Lenkmoment bestimmt, wodurch ein nochmals verbessertes Lenkgefühl erreicht wird.

Das Mittenmoment wird in Abhängigkeit von einem Lenkwinkel und der Fahrzeuggeschwindigkeit bestimmt. Das Mittenmoment erzeugt ein Lenkmoment in Richtung Geradeausstellung des Lenkmittels, wodurch eine Verbesserung des Lenkgefühls erreicht wird. Die Abhängigkeit von der Fahrzeuggeschwindigkeit ermöglicht es, das Mittenmoment beispielsweise bei hohen Fahrzeuggeschwindigkeiten zu erhöhen und bei geringeren Fahrzeuggeschwindigkeiten zu verringern. Vorzugsweise wird das Mittenmoment derart erzeugt, dass es von einem vorgebbaren Winkelbereich um die Geradeausstellung abhängt. Damit kann folglich eine leichte Abweichung von der Geradeausstellung mittels des Beitrags zu dem Soll-Lenkmoments gut signalisiert werden, wohingegen davon auszugehen ist, dass eine starke Abweichung von der Geradeausstellung keinen besonderen Beitrag des Mittenmoments zu dem Soll-Lenkmoment mehr benötigt, da die stärkere Abweichung durch andere Komponenten ausreichend signalisiert wird.

Das erfindungsgemäße Verfahren ermöglicht somit einzelne Momente präzise zu bestimmen, die zu dem Soll-Lenkmoment beitragen sollen. Ferner ist der Beitrag jeder Einzelkomponente besonders gut an unterschiedliche Lenkungen, Fahrzeugtypen oder gewünschter Lenkgefühle anpassbar. Hierzu ist es besonders vorteilhaft, wenn der Beitrag mindestens einer Einzelkomponente applizierbar ist. Dies kann beispielsweise dadurch erreicht werden, dass jede Einzelkomponente jeweils mit einem für diese Einzelkomponente vorgebbaren Faktor multipliziert wird und die so entstehenden Produkte dann zu dem Soll-Lenkmoment addiert werden. Somit kann beispielsweise eine Komponente vollständig ausgeblendet werden (Faktor = 0), um einen Fehler oder ein ungewünschtes Verhalten bei der Bestimmung des Soll-Lenkmoment besonders einfach und sicher zu ermitteln. Ferner kann der Beitrag jeder Komponente verstärkt (Faktor > 1) beziehungsweise abgeschwächt (Faktor < 1) werden. Eine Applikation ist damit besonders gut durchführbar, da der Einfluss der Einzelkomponenten auf das gesamte Soll-Lenkmoment vorgebbar beziehungsweise regelbar ist. Damit wird ferner ermöglicht, dass die Beiträge der Einzelkomponenten in Abhängigkeit von einem vorgebbaren Fahrmodus automatisch vorgebbar sind. Wird beispielsweise ein eher "sportlicher" Fahrmodus gewünscht, so kann der Beitrag einzelner Komponenten zu dem Soll-Lenkmoment entsprechend angepasst werden. Ein sportlicher Fahrmodus kann sich beispielsweise von einem komfortablen Fahrmodus dadurch unterscheiden, dass bei dem sportlichen Fahrmodus verstärkt Informationen über die aktuelle Querbeschleunigung an den Fahrer übermittelt werden.

Gemäß einer verbesserten Ausführungsform wird in Abhängigkeit von dem Lenkwinkel, der Fahrzeuggeschwindigkeit und der Lenkgeschwindigkeit ein Rücklaufmoment als eine weitere Einzelkomponente bestimmt. Das Rücklaufmoment realisiert einen so genannten aktiven Rücklauf durch Erzeugung eines Lenkmoments in Richtung Geradeausstellung, so dass eine von Lenkwinkel und Fahrzeuggeschwindigkeit abhängige Soll-Lenkgeschwindigkeit eingeregelt wird. Dabei ergibt sich je nach Lenkgeschwindigkeit ein rückstellender oder dämpfender Lenkmomentanteil. Damit wird eine nochmals verbesserte Rückstellung ermöglicht.

Gemäß einer anderen bevorzugten Ausführungsform wird in Abhängigkeit von dem Basislenkmoment und dem Mittenmoment in einem Zwischenschritt zunächst ein Basislenkmoment mit Rückstellung bestimmt. Es wird dann das Soll-Lenkmoment in Abhängigkeit von dem Basislenkmoment mit Rückstellung sowie dem Dämpfungsmoment und dem Hysteresemoment gebildet. Vorzugsweise wird ferner eine Lenkradsollgeschwindigkeit in Abhängigkeit von der Fahrzeuggeschwindigkeit und dem Lenkwinkel bestimmt und es wird das Basislenkmoment mit Rückstellung zusätzlich in Abhängigkeit von der ermittelten Lenkradsollgeschwindigkeit, dem Lenkwinkel und der Lenkgeschwindigkeit bestimmt.

Bei dieser Ausführungsform wird ein quasi statisches Lenkkraftniveau allein durch das Basislenkmoment realisiert. Das Basislenkmoment erzeugt durch die Abhängigkeit von der Zahnstangenkraft beziehungsweise von der von außen einwirkenden Kraft bereits ein Rücklaufverhalten, das vergleichbar ist mit dem Rücklauf einer herkömmlichen Hydrauliklenkung. Um jedoch ein verbessertes Rücklaufverhalten zu erreichen und ein verbessertes Soll-Lenkmoment zu erzeugen, werden analog zu dem vorbeschriebenen aktiven Rücklauf ein Rückstell- und ein Dämpfungsmoment berücksichtigt.

Vorzugsweise wird von dem Basislenkmoment mit Rückstellung zu einem ungedämpften Rückstellmoment übergeblendet, wenn eine erfasste Ist-Lenkgeschwindigkeit kleiner ist als eine vorgebbare Soll-Lenkgeschwindigkeit und wenn das Basislenkmoment kleiner ist als das ursprünglich benötigte Rückstellmoment. Diese Bedingungen liegen beispielsweise dann vor, wenn während der Fahrt der Fahrer die Hände vom Lenkrad nimmt und somit kein Moment mehr auf die Lenkung überträgt. Damit wird automatisch zu einem ungedämpften Rückstellmoment übergeblendet, was eine Rückstellung der Lenkung in Geradeausstellung bewirkt und die Sicherheit erhöht.

Vorteilhafterweise wird mindestens ein weiteres Moment bestimmt und zu dem Soll-Lenkmoment addiert. Das weitere Moment kann beispielsweise eine Information über den Fahrzustand, den Reifenzustand oder die Beschaffenheit bzw. Art der Fahrbahnoberfläche sein. Das Moment kann ferner Teil eines Fahrassistenzsystems sein, mittels dessen eine Spurführung oder ein autonomes Fahren realisiert wird. Beispielsweise kann eine Anzeige einer Gefahrensituation durch ein Vibrieren des Lenkmittels erfolgen oder es kann ein Hinweis auf eine empfohlene Lenkungsrichtung angezeigt werden. Derartige Momente sind besonders hilfreich für die sichere Führung eines Fahrzeugs und können mittels des erfindungsgemäßen Verfahrens besonders einfach berücksichtigt und appliziert werden.

Von besonderer Bedeutung ist die Realisierung des erfindungsgemäßen Verfahrens in der Form eines Computerprogramms, das auf einem Steuergerät zur Steuerung einer Lenkeinrichtung in einem Fahrzeug und insbesondere auf einem Microprozessor in dem Steuergerät ablauffähig ist und zur Ausführung des erfindungsgemäßen Verfahrens programmiert ist. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein optisches, elektrisches oder magnetisches Speichermedium zur Anwendung kommen, beispielsweise ein Random-Access-Speicher, ein Read-Only-Speicher, ein Flash-Speicher, eine Festplatte oder eine Digital Versatile Disc (DVD).

Die Aufgabe wird auch durch ein Steuergerät der eingangs genannten Art dadurch gelöst, dass das Steuergerät Mittel zur Ausführung des erfindungsgemäßen Verfahrens aufweist. Diese Mittel sind beispielsweise in Form eines in dem Steuergerät ablaufenden Computerprogramms realisiert.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden. Es zeigen:
- Figur 1: eine Lenkvorrichtung mit einem erfindungsgemäßen Steuergerät;
- Figur 2: ein schematisches Blockschaltbild einer erfindungsgemäßen Funktionalität zur Bestimmung eines Soll-Lenkmoments gemäß einem ersten Ausführungsbeispiel; und
- Figur 3: ein schematisches Blockschaltbild einer Funktionalität zur Bestimmung eines Soll-Lenkmoments gemäß einem zweiten Ausführungsbeispiel.

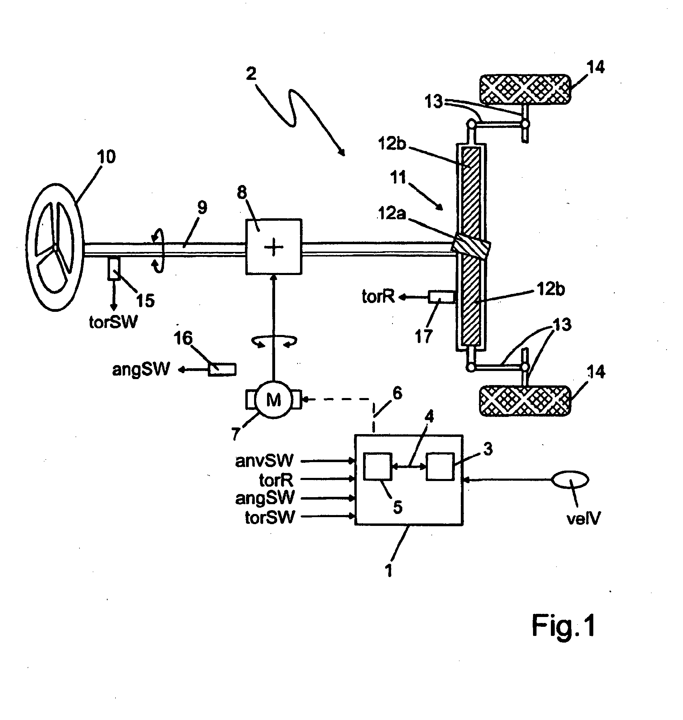

In Figur 1 ist ein Steuergerät 1 dargestellt, das einer Lenkvorrichtung 2 zugeordnet ist. In dem Steuergerät 1 ist ein Mikroprozessor 3 angeordnet, der über eine Datenleitung 4, beispielsweise ein Bussystem, mit einem Speicherelement 5 verbunden ist. Über eine Signalleitung 6 ist das Steuergerät 1 mit einem Motor 7, beispielsweise einem Elektromotor, verbunden, wodurch eine Leistungssteuerung des Motors 7 durch das Steuergerät 1 ermöglicht wird. Der Motor 7 wirkt über ein Getriebe 8 auf einen Drehstab 9. An dem Drehstab 9 ist ein Lenkmittel 10, beispielsweise ein Lenkrad, angeordnet, mittels dessen ein Drehmoment auf den Drehstab 9 durch Betätigen des Lenkmittels 10 durch einen Fahrer aufbringbar ist.

Die Lenkvorrichtung 2 weist ferner ein Lenkgetriebe 11 auf, das beispielsweise als Zahnstangenlenkgetriebe ausgebildet ist. Das Lenkgetriebe kann ferner als Kugelmuttergetriebe beziehungsweise Kugelumlaufgetriebe ausgebildet sein. In der folgenden Beschreibung wird - soweit erforderlich - überwiegend von einer Zahnstangenlenkung ausgegangen, bei der das Lenkgetriebe 11 ein Ritzel 12a und eine Zahnstange 12b umfasst. Das Lenkgetriebe 11 ist beispielsweise über das Ritzel 12a und die Zahnstange 12b sowie ein Lenkgestänge 13 mit den Rädern 14 verbunden.

Die Lenkvorrichtung 2 weist ferner einen Momentensensor 15 zur Erfassung eines Lenkmoments torSW und einen Sensor 16 zur Erfassung eines Lenkradwinkels angSW auf. In dem in Figur 1 dargestellten Ausführungsbeispiel ist der Sensor 16 dem Motor 7 zugeordnet, so dass mittels des Sensors 16 ein Rotorwinkel des Motors 7 erfasst wird. Dieser entspricht dem Lenkradwinkel angSW (möglicherweise bis auf einen Faktor, der eine Übersetzung beschreibt), da der Motor 7 über das Getriebe 8 mit dem Drehstab 9 und damit dem Lenkmittel 10 zusammenwirkt. Der Lenkradwinkel angSW kann auch mittels eines dem Lenkmittel 10 beziehungsweise dem Drehstab 9 zugeordneten Sensors erfasst werden. Jedoch ist mittels des an dem Motor 7 angeordneten Sensors 16 durch die Erfassung des Rotorwinkels eine höhere Auflösung erreichbar.

Die Lenkvorrichtung 2 weist ferner einen Sensor 17 auf, mittels dessen eine Zahnstangenkraft torR ermittelbar ist. Die Zahnstangenkraft torR entspricht einer Querbeschleunigung beziehungsweise einer Seitenführungskraft, die über die Räder 14 und das Lenkgestänge 13 auf die Zahnstange 12b wirkt. Selbstverständlich wäre es ebenso möglich, mit anderen bekannten Verfahren die Querbeschleunigung beziehungsweise die Zahnstangenkraft torR zu bestimmen. Die Zahnstangenkraft torR wird an das Steuergerät 1 übermittelt.

Bei einer alternativen Ausführungsform wird die Zahnstangenkraft torR aus anderen Größen geschätzt. Diese Schätzung wird beispielsweise ebenfalls mittels des Steuergeräts 1 durchgeführt. In diesem Fall ist eine Erfassung der Zahnstangenkraft torR mittels des Sensors 17 und eine Übertragung eines entsprechenden Signals an das Steuergerät 1 selbstverständlich nicht notwendig.

Das mittels des Momentensensors 15 erfasste Lenkmoment torSW und der mittels des Sensors 16 erfasste Lenkradwinkel angSW werden ebenfalls an das Steuergerät 1 übermittelt. Ferner wird eine aktuelle Fahrzeuggeschwindigkeit veIV an das Steuergerät übermittelt beziehungsweise dort aus anderen Größen errechnet. Dem Steuergerät 1 wird ferner eine Lenkgeschwindigkeit anvSW zugeführt. Die Lenkgeschwindigkeit anvSW bezeichnet die Umdrehungsgeschwindigkeit, mit der das Lenkmittel 10 und damit der Drehstab 9 betätigt werden. Die Lenkgeschwindigkeit anvSW kann mittels eines geeigneten Sensors beispielsweise an dem Drehstab 9 abgenommen werden. Es ist ebenso möglich, dass die Lenkgeschwindigkeit anvSW in dem Steuergerät 1 beispielsweise in Abhängigkeit von dem bereits vorliegenden Lenkradwinkel angSW und der Zeit gebildet wird.

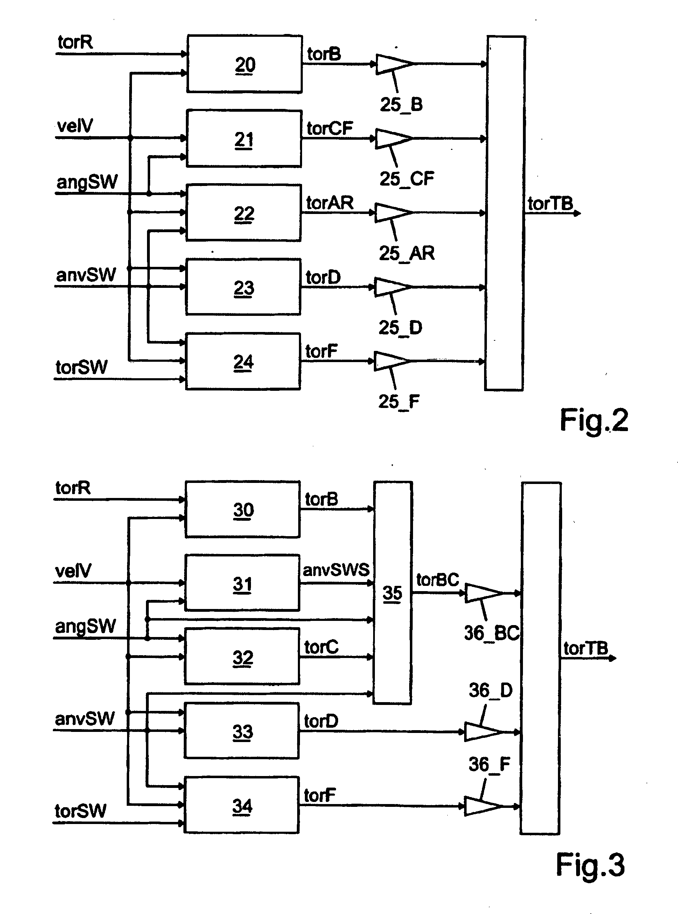

Die Funktionsweise des in dem Steuergerät 1 ablaufenden Verfahrens zur Bestimmung eines Soll-Lenkmoments wird anhand der in den Figuren 2 und 3 gezeigten Blockschaltbilder von Ausführungsbeispielen dargestellt. Das Verfahren wird hierbei in Form eines Computerprogramms realisiert, in dem die einzelnen Blöcke bzw. die diesen entsprechenden Funktionalitäten in geeigneter Weise implementiert sind. Das Computerprogramm ist beispielsweise in dem Speicherelement 5 abgespeichert und wird auf dem Mikroprozessor 3 ausgeführt.

In Figur 2 ist eine Funktion 20 dargestellt, mittels der in Abhängigkeit von der Zahnstangenkraft torR und der Fahrzeuggeschwindigkeit veIV ein Basislenkmoment torB erzeugt wird. Das Basismoment stellt ein Grundlenkkraftniveau dar, das beispielsweise durch applizierbare Momentkennlinien bestimmt wird, die von der Zahnstangenkraft torR abhängig sind. Hierbei sind für unterschiedliche Geschwindigkeitsbereiche unterschiedliche Verläufe der Momentkennlinien in der Funktion 20 abgelegt beziehungsweise der Funktion 20 zugänglich. Dies ermöglicht es, von hydraulischen Lenkungen bekannte Funktionen zu realisieren. Beispielsweise kann vorgesehen sein, bei einer höheren Geschwindigkeit ein höheres Basislenkmoment zu erzeugen, womit der von hydraulischen Lenksystemen bekannte Servotronic-Effekt erreicht wird.

Darüberhinaus führt die Verwendung der Zahnstangenkraft zu einer verbesserten Rückmeldung von Informationen über die Kraftverhältnisse des Rad-Straßenkontakts. Somit erfolgt implizit eine Rückmeldung von Informationen über einen Reibwert, eine Unebenheit der Fahrbahnoberfläche oder einen aktuellen Fahrzustand wie beispielsweise ein Unter- oder Übersteuern.

In einer Funktion 21 wird in Abhängigkeit von der Fahrzeuggeschwindigkeit veIV und dem Lenkradwinkel angSW ein Mittenmoment torCF erzeugt. Das Mittenmoment torCF stellt sich dem Fahrer an dem Lenkmittel 10 als so genanntes Mittengefühl dar. Das Mittenmoment torCF sorgt dafür, dass ein Lenkmoment in Richtung Geradeausstellung des Lenkmittels 10 in Abhängigkeit von dem aktuellen Lenkradwinkel angSW zur Verbesserung des Lenkgefühls um die Geradeausstellung des Lenkrads herum erzeugt wird.

In einer Funktion 22 wird in Abhängigkeit von dem Lenkradwinkel angSW, der Fahrzeuggeschwindigkeit veIV und der Lenkgeschwindigkeit anvSW ein so genannter aktiver Rücklauf torAR erzeugt, der ein Lenkmoment in Richtung Geradeausstellung des Lenkrads zur Verfügung stellt, wodurch eine von dem Lenkradwinkel angSW und der Fahrzeuggeschwindigkeit veIV abhängige Soll-Lenkgeschwindigkeit eingeregelt wird. Je nach tatsächlicher Lenkgeschwindigkeit anvSW ergibt sich damit ein rückstellendes oder dämpfendes Moment.

In einer Funktion 23 wird ein Dämpfungsmoment TorD beziehungsweise eine so genannte aktive Dämpfung in Abhängigkeit von der Lenkgeschwindigkeit anvSW und der Fahrzeuggeschwindigkeit veIV erzeugt.

In einer Funktion 24 wird ein Hysteresemoment torF in Abhängigkeit von dem Lenkmoment torSW, der Fahrzeuggeschwindigkeit veIV und der Lenkgeschwindigkeit anvSW erzeugt. Das Hysteresemoment torF kann auch als Reibungsmoment bezeichnet werden, da es eine Reibung nachbildet, die der Lenkradbewegung und der Lenkgeschwindigkeitsrichtung entgegenwirkt. Damit wird beispielsweise in SbW-Systemen ein Lenkgefühl erreicht, das einer herkömmlichen Servolenkung, bei der eine mechanische Verbindung zwischen Lenkgetriebe 11 und Lenkmittel 10 besteht, nahe kommt.

Das Basislenkmoment torB, das Mittenmoment torCF, das Rücklaufmoment torAR, das Dämpfungsmoment torD und das Hysteresemoment torF werden jeweils über eines der Elemente 25_B, 25_CF, 25_AR, 25_D und 25_F an ein Element 26 geführt. In dem Element 26 werden die übermittelten Momente beispielsweise durch Addition überlagert und es wird so das Soll-Lenkmoment torTB erzeugt.

Mittels der Elemente 25_B, 25_CF, 25_AR, 25_D und 25_F kann der Wert der jeweiligen Momente torB, torCF, torAR, torD und torF reduziert oder verstärkt werden. Die Elemente 25_B, 25_CF, 25_AR, 25_D und 25_F realisieren damit die oben genannten Faktoren, die es ermöglichen, den Wert eines einzelnen Moments torB, torCF, torAR, torD und torF beziehungsweise den Beitrag eines einzelnen oder mehrerer Momente torB, torCF, torAR, torD und torF zu dem Gesamt-Soll-Lenkmoment torTB auf Null zu setzen. Dies ist beispielsweise vorteilhaft, wenn ein Sollhandgefühl beziehungsweise ein Soll-Lenkmoment torTB auf ein bestimmtes Fahrzeug appliziert wird. So kann besonders einfach geprüft werden, welche Einzelkomponente für ein unerwünschtes oder fehlerhaftes Signal verantwortlich ist und damit einen unerwünschten bzw. fehlerhaften Beitrag zu dem Soll-Lenkmoment torTB leistet. Unerwünschte oder fehlerhafte Momente können aufgrund von Schwingungen in dem System entstehen. Es ist somit eine verbesserte Anpassbarkeit der gesamten Funktionalität möglich.

Ferner wird durch die Elemente 25_B, 25_CF, 25_AR, 25_ und 25_F ein einfaches Umschalten unterschiedlicher Lenkgefühle ermöglich. Hierzu werden die Elemente 25_B, 25_CF, 25_AR, 25_ und 25_F beispielsweise parametrisiert, so dass durch Vorgabe von Parametern unterschiedliche Lenkgefühle direkt beispielsweise durch Anwahl in einem Menü in dem Fahrzeug realisiert werden können. Besonders einfach kann dies realisiert werden, wenn die Parameter den jeweiligen Faktoren entsprechen. Gemäß einer vorteilhaften Ausführungsform wird mindestens ein Parameter in Abhängigkeit von einem aktuellen Fahrzustand automatisch bestimmt.

Bei dem in Figur 2 dargestellten Ausführungsbeispiel ergibt sich ein quasistationäres Lenkkraftniveau aus dem Basislenkmoment torB, dem Mittenmoment torCF und dem aktiven Rücklauf beziehungsweise dem Rücklaufmoment torAR. Eine aktive Lenkradrückstellung in Richtung Geradeauslauf wird bei diesem Ausführungsbeispiel außer von dem Rücklaufmoment torAR auch durch das zentrierende Moment des Mittenmoments torCF beeinflusst. Außerdem besteht eine funktionale Kopplung zwischen dem Rücklaufmoment torAR und dem Dämpfungsmoment torD beziehungsweise der aktiven Dämpfung, da diese beiden Momente in Abhängigkeit von der jeweiligen Applikation ein Dämpfungsmoment erzeugen.

Um eine Applikation des gewünschten Lenkgefühls nochmals zu erleichtern, werden in dem in Figur 3 dargestellten Ausführungsbeispiel die das quasistationäre Lenkkraftniveau beeinflussenden Momente funktional entkoppelt. Hierzu wird in dem in Figur 3 dargestellten Ausführungsbeispiel in einer Funktion 30 zunächst ein Basislenkmoment torB erzeugt, das dem in Figur 2 dargestellten Basislenkmoment torB entspricht.

In einer Funktion 31 wird eine Lenkradsollgeschwindigkeit anvSWS in Abhängigkeit von einer aktuellen Fahrzeuggeschwindigkeit veIV und einem aktuellen Lenkradwinkel angSW erzeugt. Die Bedeutung der Lenkradsollgeschwindigkeit anvSWS wird weiter unten im Zusammenhang mit weiteren Funktionen beschrieben.

In einer Funktion 32 wird ein Mittenmoment torC in Abhängigkeit von der aktuellen Fahrzeuggeschwindigkeit veIV und dem Lenkradwinkel angSW erzeugt. Dieses Mittenmoment torC ist wie das bezüglich 2 beschriebene Mittenmoment torCF ein Lenkmoment, das in Richtung Geradeausstellung des Lenkrads wirkt. Das Mittenmoment torC dient jedoch primär als Zentrier- beziehungsweise Rückstellmoment, wohingegen das bezüglich der Figur 2 beschriebene Mittenmoment torCF primär der Erzeugung eines Mittengefühls dient. Der für ein Rückstellen verantwortliche Anteil für das Soll-Lenkmoment torTB wird bei dem in Figur 2 dargestellten Ausführungsbeispiel mittels des Rücklaufmoments torAR beziehungsweise des aktiven Rücklaufs realisiert.

In einer Funktion 33 wird ein Dämpfungsmoment torD erzeugt, das dem von der Funktion 23 in Figur 2 dargestellten Dämpfungsmoment torD entspricht. Ebenso wird in einer Funktion 34 ein Hysteresemoment torF erzeugt, das dem in Figur 2 dargestellten und von Funktion 24 erzeugten Hysteresemoment torF entspricht.

Das Dämpfungsmoment torD und das Hysteresemoment torF werden über Elemente 36_D und 36_F zu einer Funktion 37 geführt. Hierbei entsprechen die Elemente 36_D und 36_F den Elementen 25_D und 25_F. Die Funktion 37 dient - ebenso wie die Funktion 26 - einer Zusammenführung der einzelnen erzeugten Momente, was beispielsweise durch Addition realisiert wird, so dass sich das zu erzeugende Soll-Lenkmoment torTB ergibt.

Die von den Funktionen 30 und 32 erzeugten Momente torB und torC, sowie die von der Funktion 31 erzeugte Lenkradsollgeschwindigkeit anvSWS, werden einer Funktion 35 zugeführt. Die Funktion 35 bildet aus diesen Momenten sowie aus dem Lenkradwinkel angSW und der Lenkgeschwindigkeit anvSW ein Basislenkmoment mit Rückstellung torBC, welches über ein Element 36_BC der Funktion 37 zugeführt wird. Das Element 36_BC wirkt analog zu den Elementen 36_D und 36_F und ermöglicht folglich eine Verringerung, Verstärkung oder vollständige Löschung des Beitrags des Basismoments mit Rückstellung torBC zu dem Soll-Lenkmoment torTB.

Das in Figur 3 dargestellte Ausführungsbeispiel zeigt eine verbesserte funktionale Entkopplung der einzelnen Applikationsfunktionen 30, 31, 32, 33 und 34 dadurch, dass das quasistatische Lenkkraftniveau zunächst durch das Basislenkmoment torB realisiert wird. Das Basislenkmoment torB erzeugt durch die Abhängigkeit von der Zahnstangenkraft torR bereits ein Rücklaufverhalten, das vergleichbar ist mit dem Rücklauf einer herkömmlichen Hydrauliklenkung. Für ein verbessertes Rücklaufverhalten werden nun analog zum aktiven Rücklauf beziehungsweise dem in Figur 2 dargestellten Rücklaufmoment torAR jedoch zusätzlich ein Rückstellmoment torC und ein Dämpfungsmoment torD benötigt wird.

Mittels der Funktion 35 wird bei dem in Figur 3 dargestellten Ausführungsbeispiel von dem Basislenkmoment torB zu einem ungedämpften Rückstellmoment übergeblendet, wenn die aktuelle Lenkgeschwindigkeit anvSW kleiner ist die applizierbare Soll-Lenkgeschwindigkeit anvSWS und wenn das Basislenkmoment torB kleiner ist als das benötigte Rückstellmoment torC. Selbstverständlich ist das Überblendverhalten ebenfalls einstellbar, so dass auch die Funktionalität 35 an unterschiedliche Fahrzeugtypen oder zu erreichende Lenkgefühle anpassbar ist. Hierzu kann die Funktion 35 in geeigneter Weise parametrisiert werden. Ergänzend bzw. parallel hierzu kann die Dämpfung unabhängig von einem aktuellen Lenkkraftniveau und einem Rückstellmoment mittels der Funktion 33 und des von dieser Funktion 33 erzeugten Dämpfungsmoments torD beeinflusst bzw. appliziert werden.

Grundsätzlich liefern bisher bekannte elektromechanische Lenksysteme keine oder nur sehr geringe Fahrbahnrückmeldungen. Unter Verwendung der vorliegend vorgeschlagenen Verfahren beziehungsweise Applikationsstrukturen kann eine verbesserte Fahrbahnrückmeldung erreicht werden. Da die zurückzumeldende Information, beispielsweise eine Veränderung einer Seitenführungskraft in der verwendeten Zahnstangenkraft torR enthalten ist, resultiert aus dieser Zahnstangenkraftänderung eine entsprechende Änderung im Basislenkmoment, was wiederum das Soll-Lenkmoment beeinflusst. Eine Veränderung der Seitenführungskraft kann sich beispielsweise aus einer Veränderung eines Reibwerts, einer Unebenheit der Fahrbahn oder während eines Über- oder Untersteuerns ergeben. Die Stärke der impliziten Fahrbahn- bzw. Fahrzustandsrückmeldung hängt hierbei von der Steigung einer applizierbaren Kennlinie ab, mittels der das Basislenkmoment bestimmt wird.

Wie bereits erwähnt, wird vorliegend die Zahnstangenkraft torR verwendet, von der das Basislenkmoment torB abhängt. Selbstverständlich können die Basislenkmomente torB aber auch in Abhängigkeit von einer anderen, die Seitenführungskräfte der Reifen repräsentierenden Größe, appliziert werden. Hier ist beispielsweise die Querbeschleunigung anstelle der Zahnstangenkraft eine geeignete Größe.

Mittels der vorgeschlagenen Applikationsstrukturen ist es ferner besonders einfach möglich, weitere Informationen über das Soll-Lenkmoment an den Fahrer zu übermitteln. Wird beispielsweise eine plötzliche Veränderung der Zahnstangenkraft torR erkannt, so kann eine nochmals verstärkte kurzzeitige Rückmeldung erfolgen, um den Fahrer auf die starke Veränderung aufmerksam zu machen. Hier kann beispielsweise eine Verstärkung in Abhängigkeit von einer aktuellen Raddrehzahl erfolgen, wobei bei höheren Geschwindigkeiten ein verstärkter Einfluss auf das Soll-Lenkmoment vorgesehen sein kann. Die Raddrehzahlen können verwendet werden, um Störungen zu erkennen bzw. zu plausibilisieren, wobei insbesondere eine aktuelle Differenz der Raddrehzahlen verschiedener Räder herangezogen werden kann.

Mittels der vorgeschlagenen Applikationsstrukturen können besonders einfach weitere Momente hinzugefügt werden. Beispielsweise kann durch einfache Addition ein Lenkradwackeln hinzugefügt werden, um auf eine besondere Gefahr hinzuweisen oder einen möglicherweise schläfrig gewordenen Fahrer zur Aufmerksamkeit zu ermahnen.

Die vorgeschlagenen Applikationsstrukturen können vollständig unabhängig von dem zugrunde liegenden Lenksystem realisiert werden. Zwar wurde in Figur 1 eine elektrische Zahnstangenlenkung gezeigt, die vorgeschlagenen Applikationsstrukturen lassen sich jedoch genauso bei einem SbW-System einsetzen. Hier wird der Motor 7 dann beispielsweise angesteuert, um das Lenkhandmoment torTB zu erzeugen, wobei ein weiterer, nicht dargestellter Elektromotor das eigentliche Lenkmoment erzeugt, da keine mechanische Verbindung von dem Lenkrad beziehungsweise dem Lenkmittel 10 zu dem Lenkgetriebe 11 vorhanden ist. Selbstverständlich kann der Motor 7 in bekannter Weise an unterschiedlichen Stellen auf den Drehstab 9, die Zahnstange 12b, das Lenkgetriebe 11 oder das Lenkmittel 10 wirken.

## Patentansprüche

1. Verfahren zur Bestimmung eines Soll-Lenkmoments (torTB) für ein Lenkmittel (10) einer Lenkvorrichtung (2) in einem Fahrzeug zur Regelung eines Lenkmoments, **dadurch gekennzeichnet, dass**
- in Abhängigkeit von einer von außen einwirkenden Kraft (torR) und einer Fahrzeuggeschwindigkeit (veIV) ein Basislenkmoment (torB) bestimmt wird;
- in Abhängigkeit von einer Lenkgeschwindigkeit (anvSW) und der Fahrzeuggeschwindigkeit (veIV) ein Dämpfungsmoment (torD) zur Erzeugung einer aktiven Dämpfung bestimmt wird;
- in Abhängigkeit von der Lenkgeschwindigkeit (anvSW) und der Fahrzeuggeschwindigkeit (veIV) ein Hysteresemoment (torF) zur Darstellung einer Reibung bestimmt wird;
- in Abhängigkeit von einem Lenkradwinkel (angSW) und der Fahrzeuggeschwindigkeit (veIV) ein Mittenmoment (torCF; torC) in Richtung Geradeausstellung des Lenkmittels (10) bestimmt wird; und
- das Basislenkmoment (torB), das Dämpfungsmoment (torD), das Hysteresemoment (torF) und das Mittenmoment (torCF; torC) Einzelkomponenten bilden, in Abhängigkeit derer das Soll-Lenkmoment (torTB) bestimmt wird.

2. Verfahren nach Anspruch 1, **dadurch gekennzeichnet, dass** das Hysteresemoment (torF) und/oder das Dämpfungsmoment (torD) zusätzlich in Abhängigkeit von einem Lenkmoment (torSW) bestimmt wird.

3. Verfahren nach einem der vorangehenden Ansprüche, **dadurch gekennzeichnet, dass** das Basislenkmoment (torB) mittels vorgebbarer Basislenkmomentkennlinien bestimmt wird, wobei für mindestens zwei unterschiedliche Geschwindigkeitsbereiche unterschiedlich verlaufende Basislenkmomentkennlinien vorgesehen sind.

4. Verfahren nach einem der vorangehenden Ansprüche, **dadurch gekennzeichnet, dass** das Mittenmoment (torCF; torC) in einem vorgebbaren Winkelbereich um die Geradeausstellung erzeugt wird.

5. Verfahren nach einem der vorangehenden Ansprüche, **dadurch gekennzeichnet, dass** die von außen einwirkende Kraft (torR) einer Zahnstangenkraft und/oder einer Seitenführungskraft entspricht.

6. Verfahren nach einem der vorangehenden Ansprüche, **dadurch gekennzeichnet, dass** in Abhängigkeit von dem Lenkradwinkel (angSW), der Fahrzeuggeschwindigkeit (veIV) und der Lenkgeschwindigkeit (anvSW) ein Rücklaufmoment (torAR) als eine weitere Einzelkomponente bestimmt wird.

7. Verfahren nach Anspruch 6, **dadurch gekennzeichnet, dass** das Rücklaufmoment (torAR) zusätzlich in Abhängigkeit von einem Lenkmoment (torSW) bestimmt wird.

8. Verfahren nach einem der Ansprüche 1 bis 5, **dadurch gekennzeichnet, dass** in Abhängigkeit von dem Basislenkmoment (torB) und dem Mittenmoment (torC) in einem Zwischenschritt (35) ein Basislenkmoment mit Rückstellung (torBC) bestimmt wird und das Soll-Lenkmoment (torTB) in Abhängigkeit von dem Basislenkmoment mit Rückstellung (torBC), dem Dämpfungsmoment (torD) und dem Hysteresemoment (torF) gebildet wird.

9. Verfahren nach Anspruch 7, **dadurch gekennzeichnet, dass** eine Lenkradsollgeschwindigkeit (anvSWS) in Abhängigkeit von der Fahrzeuggeschwindigkeit (veIV) und dem Lenkradwinkel (angSW) bestimmt wird und das Basislenkmoment mit Rückstellung (torBC) zusätzlich in Abhängigkeit von der Lenkradsollgeschwindigkeit (anvSWS), dem Lenkradwinkel (angSW) und der Lenkgeschwindigkeit (anvSW) bestimmt wird, wobei von dem Basislenkmoment (torB) zu einem ungedämpften Rückstellmoment (torC) übergeblendet wird, wenn eine erfasste Ist-Lenkgeschwindigkeit (anvSW) kleiner ist als die vorgebbare Lenkradsollgeschwindigkeit (anvSWS) und das Basislenkmoment (torB) kleiner ist als das ursprünglich benötigte Rückstellmoment (torC).

10. Verfahren nach einem der vorangehenden Ansprüche, **dadurch gekennzeichnet, dass** der Anteil des Beitrags mindestens einer Einzelkomponente zu dem Soll-Lenkmoment (torTB) vorgebbar ist.

11. Verfahren nach Anspruch 10, **dadurch gekennzeichnet, dass** die Anteile der Beiträge der Einzelkomponenten zu dem Soll-Lenkmoment (torTB) in Abhängigkeit von einem vorgebbaren Fahrmodus automatisch vorgegeben werden.

12. Verfahren nach Anspruch 10 oder 11, **dadurch gekennzeichnet, dass** die Anteile der Beiträge der Einzelkomponenten zu dem Soll-Lenkmoment (torTB) in Abhängigkeit von einem aktuellen Fahrzustand automatisch vorgegeben werden.

13. Verfahren nach einem der vorangehenden Ansprüche, **dadurch gekennzeichnet, dass** mindestens ein weiteres Moment bestimmt und zu dem Soll-Lenkmoment (torTB) addiert wird, wobei das mindestens eine weitere Moment mindestens eine der folgenden Information darstellt:
- einen Reifenzustand;
- eine Beschaffenheit einer Fahrbahnoberfläche;
- eine Unebenheit der Fahrbahn;
- einen aktuellen Fahrzustand, insbesondere ein Übersteuern oder ein Untersteuern.

14. Verfahren nach einem der vorangehenden Ansprüche, **dadurch gekennzeichnet, dass** mindestens ein weiteres Moment bestimmt und zu dem Soll-Lenkmoment (torTB) addiert wird, wobei das mindestens eine weitere Moment ein Vibrieren des Lenkmittels zur Anzeige einer Gefahrensituation beschreibt oder einen Hinweis auf eine empfohlene Lenkungsrichtung anzeigt.

15. Steuergerät (1) zur Steuerung/Regelung einer Lenkvorrichtung (2) in einem Fahrzeug, wobei das Steuergerät (1) eine Funktionalität zur Bestimmung eines Soll-Lenkmoments (torB) für ein Lenkmittel (10) der Lenkvorrichtung (2) zur Regelung eines Lenkmoments umfasst **gekennzeichnet durch** die Funktionalität, dass
- in Abhängigkeit von einer von außen einwirkenden Kraft (torR) und einer Fahrzeuggeschwindigkeit (veIV) ein Basislenkmoment (torB) bestimmbar ist;
- in Abhängigkeit von einer Lenkgeschwindigkeit (anvSW) und der Fahrzeuggeschwindigkeit (veIV) ein Dämpfungsmoment (torD) zur Erzeugung einer aktiven Dämpfung bestimmbar ist;
- in Abhängigkeit von der Lenkgeschwindigkeit (anvSW) und der Fahrzeuggeschwindigkeit (veIV) ein Hysteresemoment (torF) zur Darstellung einer Reibung bestimmbar ist;
- in Abhängigkeit von einem Lenkradwinkel (angSW) und der Fahrzeuggeschwindigkeit (veIV) ein Mittenmoment (torCF; torC) in Richtung Geradeausstellung des Lenkmittels (10) bestimmbar ist; und
- das Basislenkmoment, das Dämpfungsmoment (torD), das Hysteresemoment (torF) und das Mittenmoment (torCF; torC) Einzelkomponenten bilden, in Abhängigkeit derer das Soll-Lenkmoment (torTB) bestimmbar ist.

16. Steuergerät (1) nach Anspruch 15, **dadurch gekennzeichnet, dass** das Steuergerät (1) zur Durchführung eines Verfahrens nach einem der Ansprüche 1 bis 14 eingerichtet ist.

17. Computerprogramm, das auf einem Steuergerät (1) zur Steuerung und/oder Regelung einer Lenkvorrichtung (2) und insbesondere auf einem Mikroprozessor (3) in dem Steuergerät (1) ablauffähig ist, **dadurch gekennzeichnet, dass** das Computerprogramm zur Durchführung eines Verfahrens nach einem der Ansprüche 1 bis 14 programmiert ist.

18. Computerprogramm nach Anspruch 17, **dadurch gekennzeichnet, dass** das Computerprogramm auf einem Speicherelement (5) abgespeichert ist.

## Claims

1. A method for determining a target steering torque (torTB) for a steering means (10) of a steering device (2) in a vehicle for controlling a steering torque, wherein
- a base steering torque (torB) is determined as a function of an externally acting force (torR) and a vehicle speed (veIV);
- a damping torque (torD) for generating active damping is determined as a function of a steering speed (anvSW) and the vehicle speed (velV);
- a hysteresis torque (torF) for representing friction is determined as a function of the steering speed (anvSW) and the vehicle speed (velV);
- a centering torque (torCF; torC) in the direction of the straight-ahead position of the steering means (10) is determined as a function of a steering wheel angle (angSW) and the vehicle speed (velV); and
- the base steering torque (torB), the damping torque (torD), the hysteresis torque (torF) and the centering torque (torCF; torC) form individual components, as a function of which the target steering torque (torTB) is determined.

2. A method according to claim 1, wherein the hysteresis torque (torF) and/or the damping torque (torD) are additionally determined as a function of a steering torque (torSW).

3. A method according to either of the preceding claims, wherein the base steering torque (torB) is determined by means of predefinable characteristic base steering torque curves, with characteristic base steering torque curves having various progressions being provided for at least two different speed ranges.

4. A method according to any of the preceding claims, wherein the centering torque (torCF; torC) is generated in a predefinable angular range around the straight-ahead position.

5. A method according to any of the preceding claims, wherein the externally acting force (torR) corresponds to a toothed rack force and/or a cornering force.

6. A method according to any of the preceding claims, wherein a return torque (torAR) is determined as a function of the steering wheel angle (angSW), the vehicle speed (velV) and the steering speed (anvSW), and serves as a further individual component.

7. A method according to claim 6, wherein the return torque (torAR) is additionally determined as a function of a steering torque (torSW).

8. A method according to any of claims 1 to 5, wherein, in an intermediate step (35), a base steering torque with self-alignment (torBC) is determined as a function of the base steering torque (torB) and the centering torque (torC), and the target steering torque (torTB) is formed as a function of the base steering torque with self-alignment (torBC), the damping torque (torD) and the hysteresis torque (torF).

9. A method according to claim 7, wherein a target steering wheel speed (anvSWS) is determined as a function of the vehicle speed (velV) and the steering wheel angle (angSW), and the base steering torque with self-alignment (torBC) is additionally determined as a function of the target steering wheel speed (anvSWS), the steering wheel angle (angSW) and the steering speed (anvSW), with a switch taking place from the base steering torque (torB) to an undamped self-alignment torque (torC), when a detected actual steering speed (anvSW) is lower than the predefinable target steering wheel speed (anvSWS) and the base steering torque (torB) is less than the originally required self-alignment torque (torC).

10. A method according to any of the preceding claims, wherein the portion of the contribution of at least one individual component to the target steering torque (torTB) can be predefined.

11. A method according to claim 10, wherein the portions of the contributions of the individual components to the target steering torque (torTB) are automatically predefined as a function of a predefinable driving mode.

12. A method according to claim 10 or 11, wherein the portions of the contributions of the individual components to the target steering torque (torTB) are automatically predefined as a function of a current driving condition.

13. A method according to any of the preceding claims, wherein at least one further moment is determined and added to the target steering torque (torTB), the at least one further moment representing at least one of the following items of information:
- a tire condition;
- a condition of a roadway surface;
- an unevenness of the roadway; and
- a current driving condition, in particular oversteering or understeering.

14. A method according to any of the preceding claims, wherein at least one further moment is determined and added to the target steering torque (torTB), the at least one further moment describing vibrating of the steering means to indicate a hazardous situation or displaying advice for a recommended steering direction.

15. A controller (1) for controlling a steering device (2) in a vehicle, the controller (1) comprising a functionality for determining a target steering torque (torTB) for a steering means (10) of the steering device (2) for controlling a steering torque, which comprises the functionality that
- a base steering torque (torB) can be determined as a function of an externally acting force (torR) and a vehicle speed (velV);
- a damping torque (torD) for generating active damping can be determined as a function of a steering speed (anvSW) and the vehicle speed (velV);
- a hysteresis torque (torF) for representing friction can be determined as a function of the steering speed (anvSW) and the vehicle speed (velV);
- a centering torque (torCF: torC) in the direction of the straight-ahead position of the steering means (10) can be determined as a function of a steering wheel angle (angSW) and the vehicle speed (velV); and
- the base steering torque, the damping torque (torD), the hysteresis torque (torF) and the centering torque (torCF; torC) form individual components, as a function of which the target steering torque (torTB) can be determined.

16. A controller (1) according to claim 15, wherein the controller (1) is designed to carry out a method according to any of claims 1 to 14.

17. A computer program, which can be executed on a controller (1) for controlling a steering device (2) and in particular on a microprocessor (3) in the controller (1), wherein the computer program is programmed to carry out a method according to any of claims 1 to 14.

18. A computer program according to claim 17, wherein the computer program is stored on a memory element (5).

## Revendications

1. Procédé de détermination d'un couple de braquage de consigne (torTB) d'un moyen de braquage (10) d'un dispositif de braquage (2) de véhicule, en vue de réguler le couple de braquage,
le procédé étant **caractérisé en ce que**
un couple de braquage de base (torB) est déterminé en fonction d'une force (torR) agissant de l'extérieur et de la vitesse (velV) du véhicule,
**en ce qu'**un couple d'amortissement (torD) destiné à former un amortissement actif est déterminé en fonction de la vitesse de braquage (anvSW) et de la vitesse (velV) du véhicule,
**en ce qu'**un couple d'hystérésis (torF) qui représente le frottement est déterminé en fonction de la vitesse de braquage (anvSW) et de la vitesse (velV) du véhicule,
**en ce qu'**un couple médian (torCF; torC) en direction de l'orientation en ligne droite du moyen de braquage (10) est déterminé en fonction de l'angle (angSW) des roues directrices et de la vitesse (velV) du véhicule et
**en ce que** le couple de braquage de base (torB), le couple d'amortissement (torD), le couple d'hystérésis (torF) et le couple moyen (torCF; torC) forment des composants distincts en fonction desquels le couple de braquage de consigne (torTB) est déterminé.

2. Procédé selon la revendication 1, **caractérisé en ce que** le couple d'hystérésis (torF) et/ou le couple d'amortissement (torD) sont de plus déterminés en fonction du couple de braquage (torSW).

3. Procédé selon l'une des revendications précédentes, **caractérisé en ce que** le couple de braquage de base (torB) est déterminé au moyen de lignes caractéristiques de couple de braquage de base et **en ce que** des lignes caractéristiques de couple de braquage de base évoluant différemment sont prévues pour au moins deux plages de vitesses différentes.

4. Procédé selon l'une des revendications précédentes, **caractérisé en ce que** le couple moyen (torCF; torC) est formé dans une plage angulaire prédéterminée autour de l'orientation en ligne droite.

5. Procédé selon l'une des revendications précédentes, **caractérisé en ce que** la force (torR) agissant de l'extérieur correspond à une force d'une crémaillère et/ou à une force de guidage latéral.

6. Procédé selon l'une des revendications précédentes, **caractérisé en ce qu'**un couple de rappel (torAR) est déterminé comme autre composante distincte en fonction de l'angle (angSW) des roues directrices, de la vitesse (velV) du véhicule et de la vitesse de braquage (anvSW).

7. Procédé selon la revendication 6, **caractérisé en ce que** le couple de rappel (torAR) est déterminé de plus en fonction du couple de braquage (torSW).

8. Procédé selon l'une des revendications 1 à 5, **caractérisé en ce que** dans une étape intermédiaire (35), un couple de braquage de base avec rappel (torBC) est déterminé en fonction du couple de braquage de base (torB) et du couple moyen (torC) et le couple de braquage de consigne (torTB) est formé en fonction du couple de braquage de base avec rappel (torBC), du couple d'amortissement (torD) et du couple d'hystérésis (torF).

9. Procédé selon la revendication 7, **caractérisé en ce que** la vitesse de consigne des roues directrices (anvSWS) est déterminée en fonction de la vitesse (velV) du véhicule et de l'angle (angSW) de roue directrice, **en ce que** le couple de braquage de base avec rappel (torBC) est de plus déterminé en fonction de la vitesse de consigne (anvSWS) des roues directrices, de l'angle (angSW) des roues directrices et de la vitesse de braquage (anvSW), **en ce que** le couple de braquage de base (torB) est superposé à un couple non amorti de rappel (torC) si la vitesse effective de braquage (anvSW) détectée est inférieure à la vitesse prédéterminée de consigne de roue directrice (anvSWS) et si le couple de braquage de base (torB) est inférieur au couple de rappel (torC) initialement nécessaire.

10. Procédé selon l'une des revendications précédentes, **caractérisé en ce que** la proportion de la contribution d'au moins une composante distincte au couple de braquage de consigne (torTB) est prédéterminée.

11. Procédé selon la revendication 10, **caractérisé en ce que** la proportion des contributions des différentes composantes au couple de braquage de consigne (torTB) est prédéterminée de manière automatique en fonction d'un mode de conduite prédéterminé.

12. Procédé selon les revendications 10 ou 11, **caractérisé en ce que** la proportion des contributions des différentes composantes au couple de braquage de consigne (torTB) est prédéterminée automatiquement en fonction de la situation de conduite en cours.

13. Procédé selon l'une des revendications précédentes, **caractérisé en ce qu'**au moins un autre couple est déterminé et est ajouté au couple de braquage de base (torTB) et **en ce que** le ou les autres couples représentent au moins l'une des informations suivantes :
l'état des bandages de roue,
la nature de la surface de la chaussée,
l'irrégularité de la chaussée et
la situation de conduite en cours, en particulier un survirage ou un sous-virage.

14. Procédé selon l'une des revendications précédentes, **caractérisé en ce qu'**au moins un autre couple est déterminé et est ajouté au couple de braquage de consigne (torTB) et **en ce que** le ou les autres couples décrivent une vibration du moyen de braquage en vue d'indiquer une situation de danger ou indiquent une direction recommandée de braquage.

15. Appareil de commande (1) destiné à commander et/ou réguler un dispositif de braquage (2) dans un véhicule, l'appareil de commande (1) comprenant une fonctionnalité permettant de déterminer un couple de braquage de consigne (torTB) pour un moyen de braquage (10) du dispositif de braquage (2) en vue de réguler le couple de braquage,
l'appareil de commande étant **caractérisé par** les fonctionnalités suivantes :
un couple de braquage de base (torB) peut être déterminé en fonction d'une force (torR) agissant de l'extérieur et de la vitesse (velV) du véhicule,
un couple d'amortissement (torD) destiné à former un amortissement actif peut être déterminé en fonction de la vitesse de braquage (anvSW) et de la vitesse (velV) du véhicule,
un couple d'hystérésis (torF) qui représente le frottement peut être déterminé en fonction de la vitesse de braquage (anvSW) et de la vitesse (velV) du véhicule,
un couple médian (torCF; torC) en direction de l'orientation en ligne droite du moyen de braquage (10) peut être déterminé en fonction de l'angle (angSW) des roues directrices et de la vitesse (velV) du véhicule et
le couple de braquage de base, le couple d'amortissement (torD), le couple d'hystérésis (torF) et le couple moyen (torCF; torC) forment des composants distincts en fonction desquels le couple de braquage de consigne (torTB) peut être déterminé.

16. Appareil de commande (1) selon la revendication 15, **caractérisé en ce que** l'appareil de commande (1) est conçu pour exécuter un procédé selon l'une des revendications 1 à 14.

17. Programme informatique apte à être exécuté sur un appareil de commande (1) destiné à commander et/ou à réguler un dispositif de braquage (2) et en particulier sur un microprocesseur (3) prévu dans l'appareil de commande (1),
**caractérisé en ce que**
le programme informatique est programmé en vue d'exécuter un procédé selon l'une des revendications 1 à 14.

18. Programme informatique selon la revendication 17, **caractérisé en ce que** le programme informatique peut être conservé sur un élément de mémoire (5).
